# EUROPEAN PATENT SPECIFICATION

(11) **EP 3 187 401 B1**
(45) Date of publication and mention of the grant of the patent: **14.04.2021**
(21) Application number: 15836346.5
(22) Date of filing: 07.08.2015
(51) Int. Cl.: B62K 15/00

(54) **FOLDABLE BICYCLE FRAME**
KLAPPFAHRRADRAHMEN
CADRE DE BICYCLETTE PLIABLE

(30) Priority: 28.08.2014 CN 201420502538 U
(43) Date of publication of application: 05.07.2017
(73) Proprietor: Dahon Technologies Ltd., Shenzhen, Guangdong 518000 (CN)
(72) Inventor: HON, David Tak-Wei, Shenzhen Guangdong 518000 (CN); LI, Jingfeng, Shenzhen Guangdong 518000 (CN)
(74) Representative: Hellmich, Wolfgang
(86) International application number: PCT/CN2015/086365
(87) International publication number: WO 2016/029785

(56) References cited:
- WO-A1-2012/065741
- WO-A1-2012/065741
- WO-A1-2013/135560
- WO-A1-2013/135560
- CN-A- 104 002 905
- CN-U- 204 021 144
- CN-U- 204 077 939

## Description

### THCHNICAL FIELD

The present application relates to a bicycle frame, and particularly relates to a foldable bicycle frame.

### BACKGROUND OF THE INVENTION

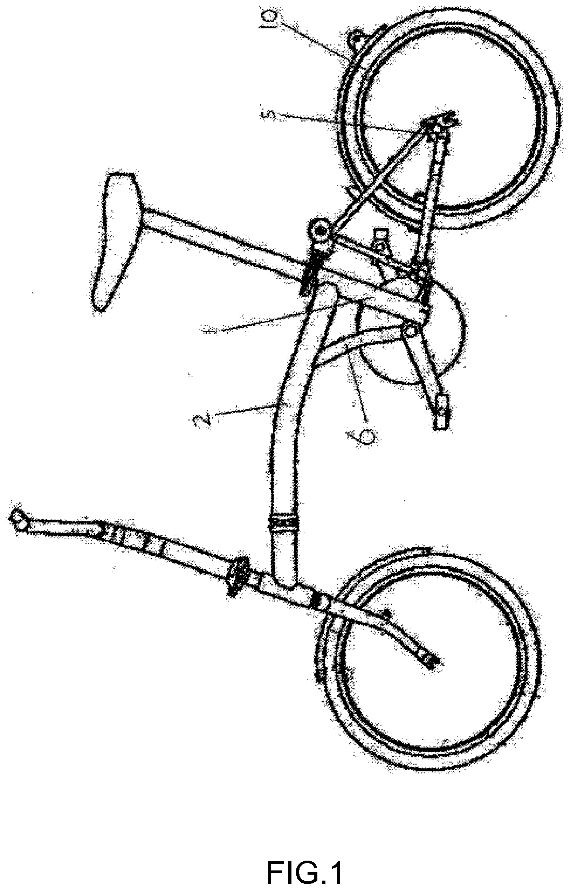

Among the many folded bicycles, the frame of the folded bicycle with a rear triangle 5 folded forward aound a hinged shaft is as shown in Figure 1 when this kind of bicycle is folded. Except the folded connector disposed on the main beam tube 2, the frame further comprises a rear triangle 5 disposed on the rear wheel 10 and the rear triangle 5 is hinge-connected to the bottom end of the center tube 1. When the frame is folded, the rear triangle 5 is folded forward aound the hinged shaft, and the front of the main beam tube 2 is laterally folded to make the whole bicycle folded. But after the rear wheel 10 is forward folded, the rear wheel 10 is under the main beam tube 2 of the frame. This kind of bicycle is lightweight and with a small folded volume. But the main beam tube 2 of the frame bears the maximum force. When riding the bicycle, in addition to the collision force between the wheels and the ground, the main beam tube 2 of the frame bears the weight of the load. Especially when the bicycle bumps on the complex road or suddenly falls into a deep pit, the main beam tube 2 will be deformed or broken. A general method is to weld some strengthened tubes 6 at the connection between the main beam tube 2 and the center tube 1, which only improves the connection strength between the main beam tube 2 and the center tube 1 and the central portion of the main beam tube 2 is not reinforced Document CN104002905, which discloses all the features of the preamble of independent claim 1, shows such a known folded bicycle. Another type of folded bicycle known from the prior art can be seen in US2013249189.

### TECHNICAL PROBLEM

The objective of the present application is to provide a foldable bicycle frame with a reasonable structure that can be stably folded, and with large protective strength for the main beam pipe.

### SOLUTION TO THE PROBLEM

### Technical solution

The present application is realized in this way: a foldable bicycle frame, comprising a center tube, a main beam tube, and a rear triangle sleeved on a rear wheel; a central portion of the main beam tube is an arched portion; both ends of the main beam tube are bent downward; one end of the main beam tube is fixedly connected to the center tube; the other end of the main beam tube is fixedly connected to a head tube;the center tube comprises a connection part; one end of the connection part is hinge-connected to the rear triangle; wherein the rear triangle comprises a horizontal plate and two symmetrical triangular frames; the horizontal plate and the two triangular frames are fixedly connected as a whole; and the horizontal plate is hinge-connected to the connection part;characterized by two lower tubes being are symmetrical with respect to the main beam tube; one end of each of the two lower tubes being fixedly connected to the other end of the connection part respectively; the other end of each of the two lower tubes and the main beam tube being fixedly connected at two thirds of the length of the main beam tube in the direction of the head tube; and the rear wheel being sleeved between the two lower tubes when the rear triangle is folded.

According to a further embodiment of the invention, a tube body of the lower tube is a square structure.

According to a further embodiment of the invention, the triangular frame comprises a flat tube, a top tube and a stand tube; one end of the flat tube is fixedly connected to one end of the top tube; the other end of the flat tube is fixedly connected to one end of the stand tube; the other end of the stand tube is fixedly connected to the other end of the top tube; the two stand tubes are fixedly connected to the horizontal plate; the bottom of each of the two stand tubes is hinge-connected to the connection part.

### THE BENEFICIAL EFFECT OF THE INVENTION

### Beneficial effect

The beneficial effect of the present application is that: one end of the lower tube is connected to the main beam tube, the other end is connected to one side of the center tube; the lower tube, the center tube and the main beam tube form a triangle structure, and therefore the foldable bicycle frame can sustain high strength and is structurally stable; the connection between the lower tube and the main beam tube plays a critical role in reinforcement, and hence the main beam tube is improved and strengthened; and the main beam tube is hard to fracture; when the rear triangle is folded, the rear wheel is sleeved by the lower tube, and therefore the folded bicycle frame is stably and firmly folded and positioned.

### BRIEF DESCRIPTION OF THE DRAWINGS

### Description of drawings

Figure 1 shows the overall structure of the foldable bicycle frame in the art;
Figure 2 shows the overall structure of the foldable bicycle frame according to the present application;
Figure 3 shows the overall structure of the foldable bicycle frame equipped with a folded rear wheel according to the present application;
Figure 4 shows the overall structure of the foldable bicycle frame equipped with a folded front wheel according to the present application.

### EMBODIMENT OF THE INVENTION

### Embodiments of the present invention

The foldable bicycle frame of the present application will now be described in further detail with reference to the accompanying drawings.

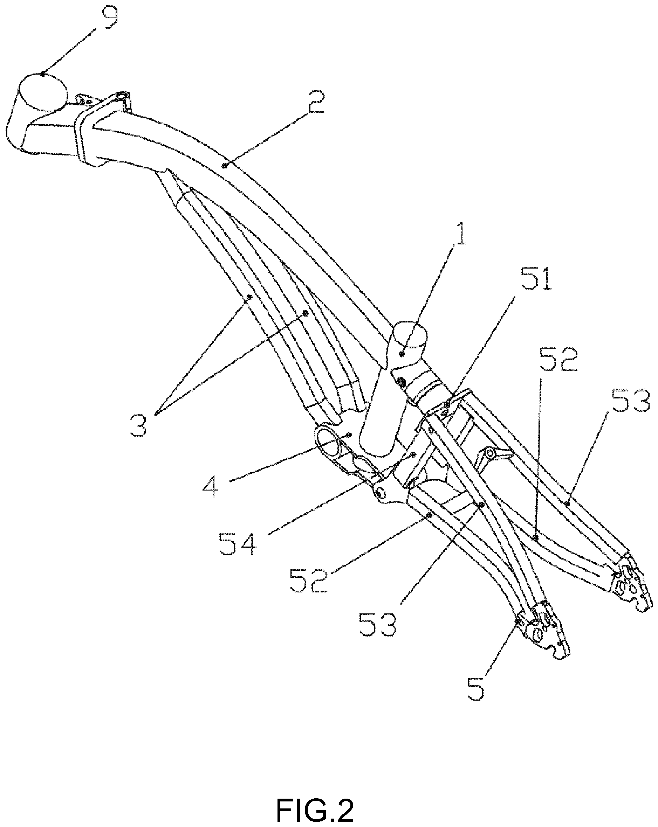

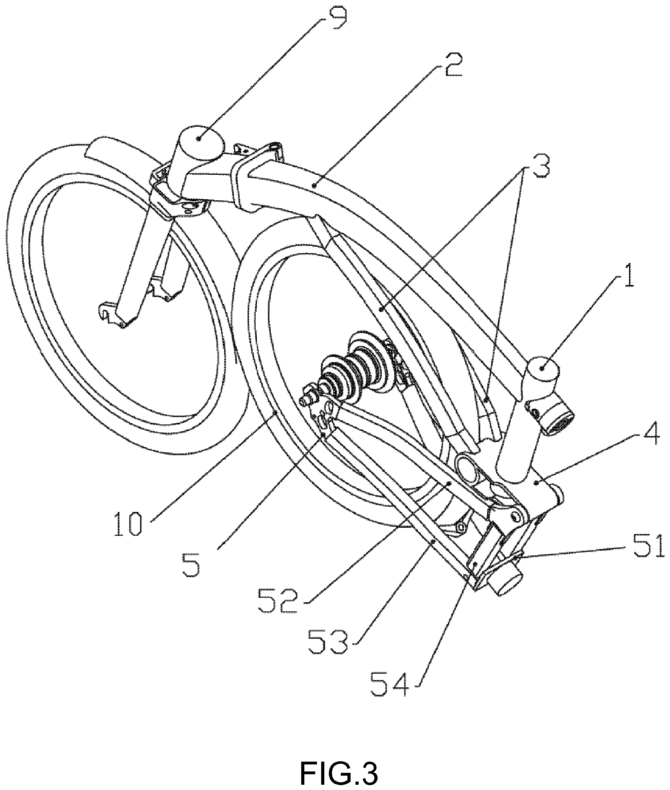

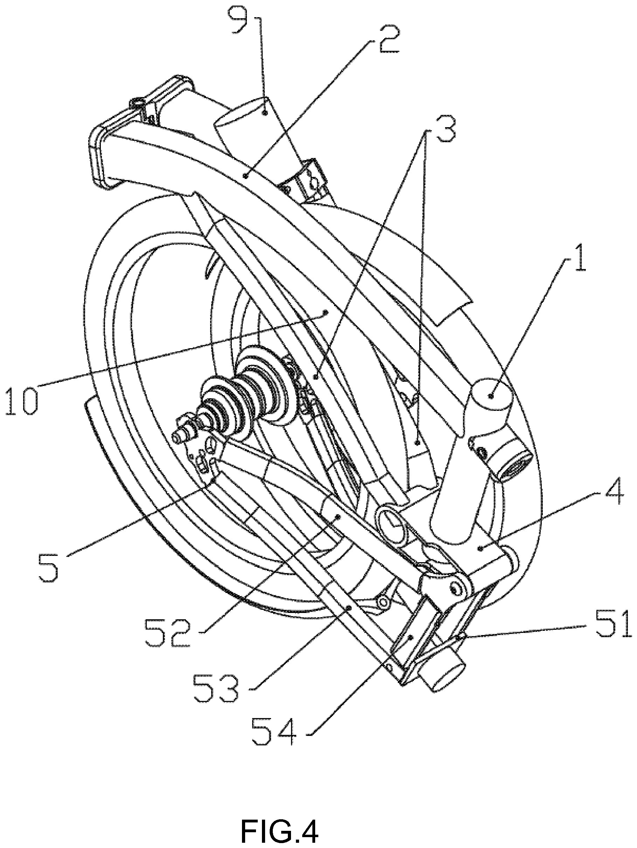

Now referring to Figure 2 to Figure 4, the foldable bicycle frame comprises a center tube 1, a main beam tube 2, a lower tube 3 and a rear triangle 5 sleeved on a rear wheel 10; the center tube 1 comprises a connection part 4 located at the bottom, and the connection part 4 is sleeved with a five-way pipe. The rear triangle 5 comprises a horizontal plate 51 and two symmetrical triangular frames; each triangular frame comprises a flat tube 52, a top tube 53 and a stand tube 54; one end of the flat tube 52 is fixedly connected to one end of the top tube 53, and the other end of the flat tube 52 is fixedly connected to one end of the stand tube 54; the other end of the stand tube 54 is fixedly connected to the other end of the top tube 53, and the triangular frame is formed; the horizontal plate 51 and the two triangular frames are fixedly connected as a whole to form the rear triangle 5 located at the rear of the frame. The triangular frame is more stable, and the frame is high in strength and stable in structure. The bottom of the two stand tubes 54 is hinge-connected to the connection part 4, making the rear triangle 5 folded forward aound the hinged connection.

There are two lower tubes 3, and according to the needs, there can also be more than two lower tubes 3. A central portion of the main beam tube 2 is an arched portion, both ends of the main beam tube are bent downward; one end of the main beam tube 2 is fixedly connected to the center tube 1, and the other end of the main beam tube 2 is fixedly connected to the head tube 9. One end of the connection part 4 is hinge-connected to the rear triangle 5, and the other end of the connection part 4 is fixedly connected to one end of each of the two lower tubes 3 respectively. The other end of each of the two lower tubes 3 and the main beam tube 2 are symmetrical to each other and fixedly connected at two thirds of the length of the main beam tube 2 in the direction of the head tube 9, so that the rear wheel 10 can be easily inserted. The lower tube 3, the center tube 1 and the main beam tube 2 form a triangle structure, and therefore the foldable bicycle frame has high strength and is stable in structure. And the lower tube 3 is fixedly connected at two thirds of the length of the main beam tube 2 in the direction of the head tube 9, that is two thirds of the length of the main beam tube 2 and the lower tube 3 form a triangle structure to maximize the strength of the main beam tube 2. The arched shape of the main beam tube 2 is conducive to that when the bicycle is folded, the rear wheel 10 is connected with the lower part of the main beam tube 2, and the folding volume is reduced. When the two ends of the main beam tube 2 are bent downward, the height of the head tube 9 is decreased, so that the height of the front fork and the handlebar is lower when the frame is folded, which is conducive to folding height. The two lower tubes 3 are fixedly connected between the main beam tube 2 and the connection part 4 are symmetrical to each other so that the strength of the main beam tube 2 can be strengthened, and the frame is balanced and has a long life span. When the bicycle is folded, the rear triangle 5 is folded forward around the hinged connection, and the front of the main beam tube 2 is laterally folded; after the rear wheel 10 is folded forward, the rear wheel 10 is sleeved between the lower tubes 3 under the frame and the main beam tube 2; the two lower tubes 3 are sleeved in the rear wheel 10, making the folded rear wheel 10 stably positioned and the frame firmly and stably positioned after being folded.

The structures of the tube body of the main beam tube 2, the tube body of the rear triangle 5 and the tube body of the lower tube 3 are all square structures. The square edge of the square structure acts as a stiffener, so the square structure makes the strength of the tube body increase, breaking the routine use of the frame which uses such as the oval tube or oval tube and round tube as the tube body. When the body strength of the frame reaches the bicycle industry standard, the body volume of the square structure can be reduced accordingly, and the volume of the frame tube body can be reduced accordingly. The structure is reasonably designed. And the strength of the tube body of the square structure is great. Therefore, the material requirements are easy to meet, and the manufacturing costs and expenses are significantly reduced. In the present application, the square structure can be used as one of the following tube bodies: the rhombic tube body, the square tube body, or other polygonal tube body whose outer side is provided with a changeable diamond edge, or the tube body with polygonal and circular arcs.

The above-mentioned specific implementations are intended to be exemplary not to be limiting. Those ordinary skills in the art can also make many modifications without breaking away from the subject of the present invention and the protection scope of the claims. All these modifications belong to the protection of the present invention.

## Claims

1. A foldable bicycle frame, comprising a center tube (1), a main beam tube (2), and a rear triangle (5) sleeved on a rear wheel (10); a central portion of the main beam tube (2) is an arched portion; both ends of the main beam tube (2) are bent downward; one end of the main beam tube (2) is fixedly connected to the center tube (1); the other end of the main beam tube (2) is fixedly connected to a head tube (9);
the center tube (1) comprises a connection part (4); one end of the connection part (4) is hinge-connected to the rear triangle (5); wherein the rear triangle (5) comprises a horizontal plate (51) and two symmetrical triangular frames; the horizontal plate (51) and the two triangular frames are fixedly connected as a whole; and the horizontal plate (51) is hinge-connected to the connection part (4);
**characterized by**
two lower tubes (3) being symmetrical with respect to the main beam tube (2); one end of each of the two lower tubes (3) being fixedly connected to the other end of the connection part (4) respectively; the other end of each of the two lower tubes (3) and the main beam tube (2) being fixedly connected at two thirds of the length of the main beam tube (2) in the direction of the head tube (9); and the rear wheel (10) being sleeved between the two lower tubes (3) when the rear triangle (5) is folded.

2. The foldable bicycle frame according claim 1, wherein, a tube body of the lower tube (3) is a square structure.

3. The foldable bicycle frame according to one of the preceding claims, wherein, the triangular frame comprises a flat tube (52), a top tube (53) and a stand tube (54); one end of the flat tube (52) is fixedly connected to one end of the top tube (53); the other end of the flat tube (52) is fixedly connected to one end of the stand tube (54); the other end of the stand tube (54) is fixedly connected to the other end of the top tube (53); the two stand tubes (54) are fixedly connected to the horizontal plate (51); the bottom of each of the two stand tubes (54) is hinge-connected to the connection part (4).

## Patentansprüche

1. Ein Klappfahrradrahmen umfassend ein Mittelrohr (1), ein Hauptträgerrohr (2) und ein hinteres Dreieck (5), das ein Hinterrad (10) ummantelt; wobei ein zentraler Abschnitt des Hauptträgerrohrs (2) ein bogenförmiger Abschnitt ist; wobei beide Enden des Hauptträgerrohrs (2) nach unten gebogen sind; wobei ein Ende des Hauptträgerrohrs (2) fest mit dem Mittelrohr (1) verbunden ist; wobei das andere Ende des Hauptträgerrohrs (2) fest mit einem Steuerrohr (9) verbunden ist;
wobei das Mittelrohr (1) einen Verbindungsteil (4) umfasst, wobei ein Ende des Verbindungsteils (4) mit dem hinteren Dreieck (5) scharnierverbunden ist; wobei das hintere Dreieck (5) eine horizontale Platte (51) und zwei symmetrische dreieckige Rahmen umfasst, wobei die horizontale Platte (51) und die beiden dreieckigen Rahmen als Ganzes fest miteinander verbunden sind und die horizontale Platte (51) mit dem Verbindungsteil (4) scharnierverbunden ist;
**dadurch gekennzeichnet, dass**
zwei untere Rohre (3) zum Hauptträgerrohr (2) symmetrisch sind; wobei jeweils ein Ende der beiden unteren Rohre (3) fest mit dem anderen Ende des Verbindungsteils (4) verbunden ist; wobei das andere Ende jedes der beiden unteren Rohre (3) und des Hauptträgerrohrs (2) fest auf zwei Dritteln der Länge des Hauptträgerrohrs (2) in Richtung des Steuerrohrs (9) miteinander verbunden sind; und wobei das Hinterrad (10) zwischen den beiden unteren Rohren (3) ummantelt ist, wenn das hintere Dreieck (5) zusammengeklappt ist.

2. Klappfahrradrahmen gemäß Anspruch 1, wobei ein Rohrkörper des unteren Rohrs (3) eine quadratische Struktur aufweist.

3. Klappfahrradrahmen gemäß einem der vorangehenden Ansprüche, wobei der dreieckige Rahmen ein Flachrohr (52), ein Oberrohr (53) und ein Standrohr (54) umfasst; wobei ein Ende des Flachrohrs (52) fest mit einem Ende des Oberrohrs (53) verbunden ist; wobei das andere Ende des Flachrohrs (52) fest mit einem Ende des Standrohrs (54) verbunden ist; wobei das andere Ende des Standrohrs (54) fest mit dem anderen Ende des Oberrohrs (53) verbunden ist; wobei die beiden Standrohre (54) fest mit der horizontalen Platte (51) verbunden sind; wobei die Unterseite jedes der beiden Standrohre (54) mit dem Verbindungsteil (4) scharnierverbunden ist.

## Revendications

1. Cadre de vélo pliable, comprenant un tube central (1), un tube de barre principale (2) et un triangle arrière (5) emmanché sur une roue arrière (10) ; une partie centrale du tube de barre principale (2) est une partie arquée ; deux extrémités du tube de barre principale (2) sont fléchies vers le bas ; une extrémité du tube de barre principale (2) est reliée fixement au tube central (1) ; l'autre extrémité du tube de barre principale (2) est reliée fixement à un tube de direction (9) ;
le tube central (1) comprend une partie de connexion (4) ; une extrémité de la partie de connexion (4) est reliée par charnière au triangle arrière (5) ; dans lequel le triangle arrière (5) comprend une plaque horizontale (51) et deux cadres triangulaires symétriques ; la plaque horizontale (51) et les deux cadres triangulaires sont reliés fixement comme un tout ; et la plaque horizontale (51) est reliée par charnière à la partie de connexion (4) ;
**caractérisé par** :
deux tubes inférieurs (3) étant symétriques par rapport au tube de barre principale (2) ; une extrémité de chacun des deux tubes inférieurs (3) étant reliée fixement à l'autre extrémité de la partie de connexion (4) respectivement ; l'autre extrémité de chacun des deux tubes inférieurs (3) et du tube de barre principale (2) étant reliée fixement aux deux tiers de la longueur du tube de barre principale (2) dans la direction du tube de direction (9); et la roue arrière (10) étant emmanchée entre les deux tubes inférieurs (3) lorsque le triangle arrière (5) est plié.

2. Cadre de vélo pliable selon la revendication 1, dans lequel un corps de tube du tube inférieur (3) est une structure carrée.

3. Cadre de vélo pliable selon l'une quelconque des revendications précédentes, dans lequel le cadre triangulaire comprend un tube plat (52), un tube supérieur (53) et un tube statif (54) ; une extrémité du tube plat (52) est reliée fixement à une extrémité du tube supérieur (53) ; l'autre extrémité du tube plat (52) est reliée fixement à une extrémité du tube statif (54) ; l'autre extrémité du tube statif (54) est reliée fixement à l'autre extrémité du tube supérieur (53) ; les deux tubes statifs (54) sont reliés fixement à la plaque horizontale (51) ; la partie inférieure de chacun des deux tubes statifs (54) est reliée par charnière à la partie de connexion (4).
